# EUROPEAN PATENT APPLICATION

(11) **EP 2 345 833 A1**
(43) Date of publication of application: **20.07.2011**
(21) Application number: 10000270.8
(22) Date of filing: 13.01.2010
(51) Int. Cl.: F16L 19/028

(54) **Flare nut and refrigerant pipe set, air conditioner, and freezer including the same**

(71) Applicant: Toyo Densen Co., Ltd., Osaka-shi Osaka (JP)
(72) Inventor: Yasuda, Kiyoshi, Osaka-shi Osaka (JP); Iwata, Mitsushiro, Osaka-shi Osaka (JP)
(74) Representative: Müller-Boré & Partner Patentanwälte

(57) **Abstract**

A flare nut (5) includes a nut main body (31) having a hexagonal outer surface ( 5b ) and a circular cylinder portion ( 32 ) provided so as to extend from the nut main body ( 31 ) to one opening end of an insertion hole ( 5a ) along the insertion hole (5a) in a circular cylindrical shape having a major diameter smaller than the nut main body (31), to which a waterproof cap 28 of a circular cylindrical shape bridging to a tube main body (33) of a flare tube (3) is attached.

## Description

### BACKGROUND OF THE INVENTION

### 1. Technical Field

The present invention relates to a flare nut and a refrigerant pipe set, an air conditioner, and a freezer including the same.

### 2. Background Art

As a refrigerant pipe connecting an outdoor unit and an indoor unit of an air conditioner for flowing a refrigerant, there has been known a pipe described, for example, in a reference *(*Kucho-Times, Kucho-Times Co., Ltd. July 25, 2007, pp.12-13). With the recent surging price of copper as a backdrop, this refrigerant pipe has a flare tube formed of an aluminum tube made of aluminum cheaper than copper or alloy thereof at an intermediate portion and copper tubes made of copper at the both ends. When there is a point at which dissimilar metals are in contact with each other as with a flare tube using copper and aluminum or alloy thereof described in the reference above, it is necessary to take a waterproof countermeasure for suppressing bimetallic corrosion (so-called galvanic corrosion).

According to the invention described in the reference above, an aluminum tube and a copper tube are connected to each other by pressure welding or welding and the connected portions are protected with heat shrinkable tubes or the like. It is said that corrosion resistance against the bimetallic corrosion can be enhanced owing to this configuration.

The structure described in the reference above, however, has a total of four connected portions per refrigerant pipe. The manufacturing steps are therefore increased and so is the cost- In addition, a possibility of inconveniences, such as a gas leak from the connected portions, becomes higher as the connected portions are increased.

### SUMMARY OF THE INVENTION

The present invention was devised in view of the problems discussed above and has an object to provide a flare nut capable of making attachment accuracy at the connected portions uniform during the installation work and having an excellent waterproof property, and a refrigerant pipe set, an air conditioner, and a freezer including the same.

A flare nut of the present invention is used to connect a flare tube having a tube main body of a circular cylindrical shape and a flare portion formed at an end portion of the tube main body to a joint main body of a tubular shape having a male screw portion on an outer surface in a state where respective through-holes communicate with each other. The flare nut has an insertion hole in which a part of the flare tube including the flare portion is disposed on a side of one opening end and a part of the joint main body including the male screw portion is disposed on a side of the other opening end. The flare nut includes a nut main body having a female screw portion adapted to be screwed onto the male screw portion and a pressing portion pressing the flare portion toward the joint main body on an inner surface of the insertion hole and an outer surface of a polygonal shape in cross section, and a circular cylinder portion provided so as to extend from the nut main body to the one opening end along the insertion hole in a circular cylindrical shape having a major diameter smaller than the nut main body and adapted to be covered with a waterproof material sealing a gap between the circular cylinder portion and the tube main body at the one opening end.

### BRIEF DESCRIPTION OF THE DRAWINGS

Fig. 1 is a view schematically showing an air conditioner according to an embodiment of the present invention;
Fig. 2 is a partial cross section showing a major portion of a refrigerant pipe set of Fig. 1;
Fig. 3 is a cross section showing a flare tube of the refrigerant pipe set of Fig 2;
Fig. 4 is a cross section showing a joint main body and a flare nut of the refrigerant pipe set of Fig. 2;
Fig. 5 is a cross section showing a waterproof cap of the refrigerant pipe set of Fig. 2;
Fig. 6A is a perspective view showing the flare nut of Fig. 4;
Fig. 6B is another perspective view showing the flare nut of Fig- 4;
Fig. 7A is a front view showing a flare nut according to another embodiment of the present invention;
Fig. 7B is a partial cross section of the flare nut of Fig. 7A when viewed from a side surface; and
Fig. 7C is a partial cross section showing a waterproof cap attached to a circular cylinder portion of the flare nut of Fig. 7A.

### MODE FOR CARRYING OUT THE INVENTION

Hereinafter, a flare nut according to an embodiment of the present invention and a refrigerant pipe set and an air conditioner including the same will be described in detail with reference to the drawings.

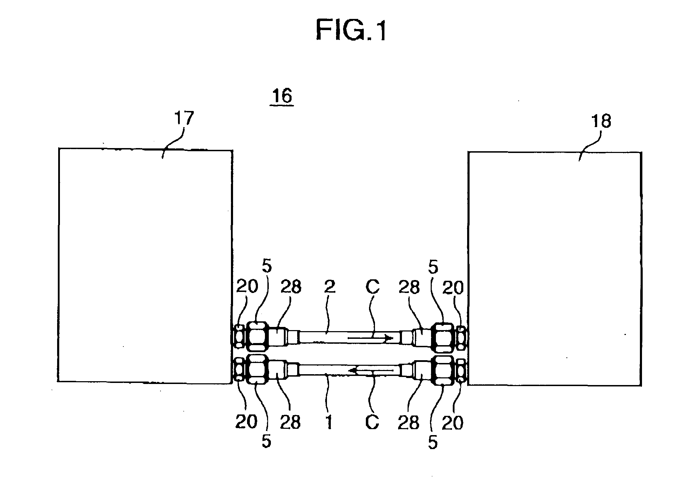

As is shown in Fig. 1, an air conditioner 16 of this embodiment includes an outdoor unit 17, an indoor unit 18, a pair of refrigerant pipes 1 and 2 serving as channels for circulating a refrigerant between the outdoor unit 17 and the indoor unit 18.

One refrigerant pipe 1 is a pipe to flow a refrigerant C at a low pressure from the indoor unit 18 to the outdoor unit 17. The other refrigerant pipe 2 is a pipe to flow the refrigerant C at a high pressure from the outdoor unit 17 to the indoor unit 18- Because the refrigerant pipe 1 and the refrigerant pipe 2 are of substantially the same configuration except for dimensions, the refrigerant pipe 1 will now be described as a representative for ease of description.

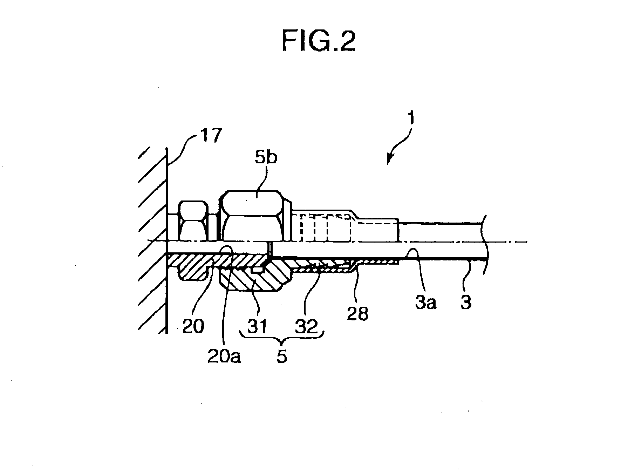

As is shown in Fig. 2, the refrigerant pipe 1 includes a joint main body 20 connected to the outdoor unit 17, a flare nut 5 threaded into the joint main body 20, a flare tube 3 connected to the joint main body 20 with the flare nut 5, and a waterproof cap 28 sealing a gap between the flare nut 5 and the flare tube 3.

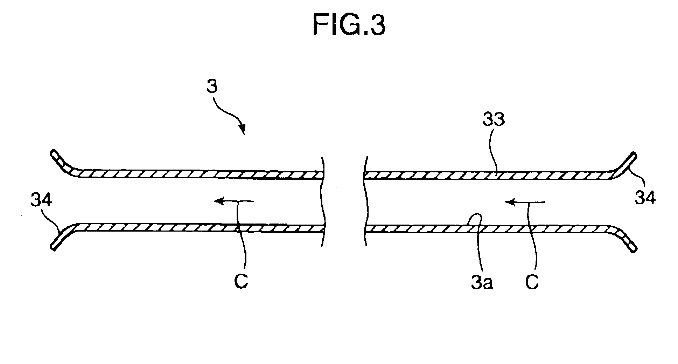

As are shown in Fig. 2 and Fig. 3, the flare tube 3 has a tube main body 33 of a circular cylindrical shape having a through-hole 3a and flare portions 34 having a diameter expanded by flaring at the both end portions of the tube main body 33.

The flare tube 3 has aluminum or alloy thereof as a chief ingredient. The alloy can be, for example, aluminum alloy containing manganese (International Registered Alloy Designation 3003) . In a case where this flare tube 3 is used, an increase of the cost can be suppressed by making the manufacturing steps simpler than in a case where the aluminum tube and the copper tube are joined to each other by pressure welding or welding and the connected portions are protected with the heat shrinkable tubes as described above.

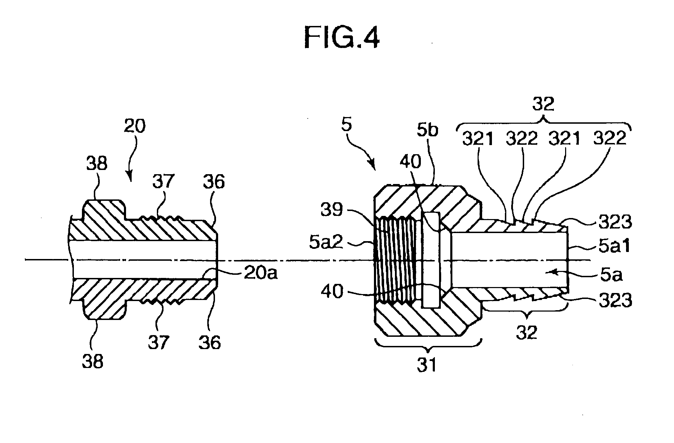

The joint main body 20 is connected to an internal pipe (not shown) of the outdoor unit 17 and, as are shown in Fig. 2 and Fig. 4, has a through-hole 20a communicating with the through-hole 3a of the flare tube 3. At the tip end, the joint main body 20 has an inclined surface 36 on which the flare portion 34 abuts. A male screw portion 37 is formed on the outer surface of the joint main body 20 at the tip end side (on the side of the flare tube 3). A nut portion 38 may be provided on the outer surface of the joint main body 20 on the base end side (on the side of the outdoor unit 17). The nut portion 38 is used to secure the flare nut 5 to the joint main body 20 by fitting a tool (not shown) when the flare nut 5 is threaded into the joint main body 20.

In this embodiment, a material of the joint main body 20 is a material having a chief ingredient different from that of the flare tube 3. A material of the joint main body 20 can be, for example, brass.

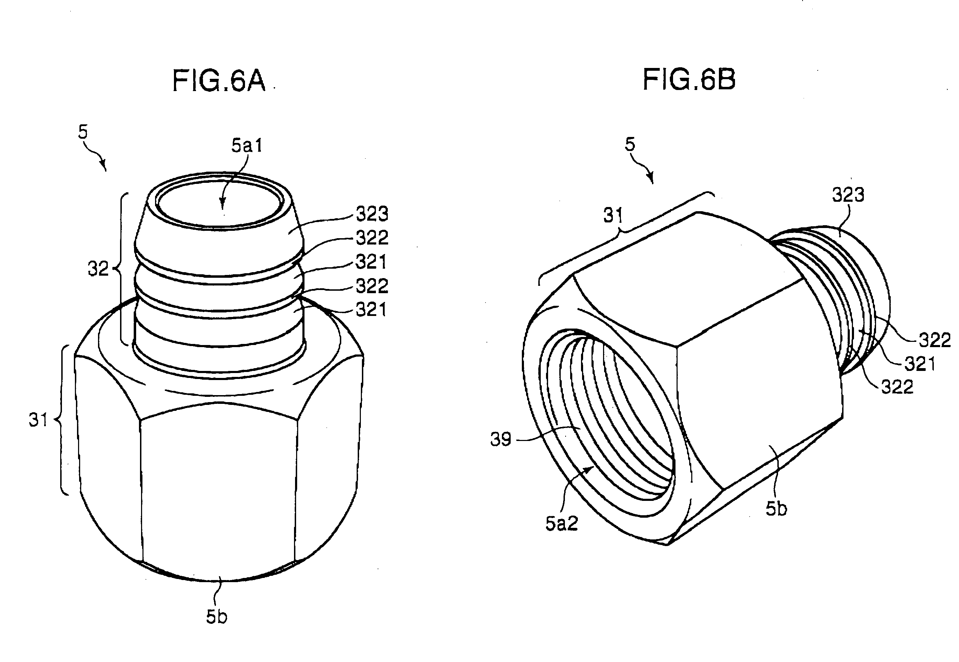

As is shown in Fig. 2, the flare nut 5 is used to connect the flare tube 3 and the joint main body 20 in a state where the respective through-holes 3a and 20a communicate with each other. As are shown in Fig. 4 and Fig. 6A and Fig. 6B, the flare nut 5 has an insertion hole 5a into which the flare tube 3 and the joint main body 20 are inserted and inside of which a part of the flare tube 3 including the flare portion 34 and a part of the joint main body 20 including the male screw portion 37 are disposed. The other portion of the flare tube 3 protrudes to the outside from one opening end 5al of the insertion hole 5a whereas the other portion of the joint main body 20 protrudes to the outside from the other opening end 5a2 of the insertion hole 5a. The flare nut 5 has a nut main body 31 and a circular cylinder portion 32 provided so as to extend from the nut main body 31.

The nut main body 31 has a female screw portion 39 screwed onto the male screw portion 37 and a pressing surface 40 pressing the flare portion 34 toward the joint main body 20 on the inner surface of the insertion hole 5a. The pressing surface 40 inclines with respect to the center axis of the nut main body 31 at substantially the same angle as the angle of the inclined surface of the flare portion 34.

A hexagonal outer surface 5b is used to secure the flare nut 5 to the joint main body 20 by fitting a tool (not shown) when the flare nut 5 is threaded into the joint main body 20.

The circular cylinder portion 32 is a region on which to attach the waterproof cap 28 described below that bridges to the tube main body 33 of the flare tube 3. The circular cylinder portion 32 is provided so as to extend from the nut main body 31 to the one opening end 5al of the insertion hole 5a along the insertion hole 5a. The circular cylinder portion 32 is of a circular cylindrical shape having a circular outer surface in cross section taken on a plane perpendicular to the extending direction.

The major diameter of the circular cylinder portion 32 is smaller than the major diameter of the nut main body 31. It is preferable that the major diameter of the circular cylinder portion 32 is nearly as small as the minor diameter of the female screw portion 39 or smaller than the minor diameter of the female screw portion 39. In a case where the flare nut is formed of the nut main body alone as with a conventional flare nut, it is difficult to make the major diameter nearly as small as the minor diameter of the female screw portion because of the need to ensure the rigidity of the nut main body. By contrast, the flare nut 5 of this embodiment is further provided with the circular cylinder portion 32 so as to extend from the nut main body 31. It thus becomes possible to make the major diameter of the circular cylinder portion 32 nearly as small as or smaller than the minor diameter of the female screw portion 39.

In addition, it is preferable that the length of the circular cylinder portion 32 in the extending direction is larger than the major diameter of the cylinder portion 32 . By making the length of the circular cylinder portion 32 in the extending direction long enough to be larger than the major diameter of the circular cylinder portion 32, the waterproof property can be enhanced further.

Steps are formed on the outer surface of the circular cylinder portion 32. These steps are formed of trough portions 321 and crest portions 322 provided in an annular shape along the circumferential direction of the circular cylinder portion 32. These trough portions 321 and the crest portions 322 are disposed alternately along the extending direction of the circular cylinder portion 32. On the side of the one opening end 5al, the circular cylinder portion 32 has an inclined surface (inclined portion) 323 having a major diameter that becomes smaller toward the one opening end 5al.

In this embodiment, a material of the flare nut 5 has a chief ingredient different from that of a material of the flare tube 3. A material of the joint main body 20 can be, for example, brass.

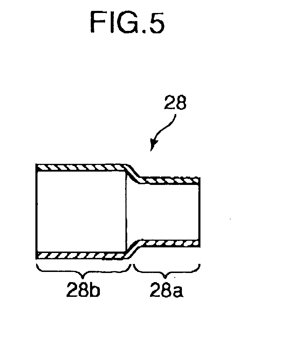

Fig. 5 is a cross section showing a waterproof cap of the refrigerant pipe set of Fig. 2. This waterproof cap 28 is disposed so as to bridge between the tube main body 33 and the circular cylinder portion 32 in order to seal a gap between the circular cylinder portion 32 and the tube main body 33 at the one opening end 5al and is of a circular cylindrical shape that covers at least a part of the outer surface of the tube main body 33 and at least a part of the outer surface of the circular cylinder portion 32. The waterproof cap 28 is a circular cylindrical shape formed of a small diameter portion 28a covering a part of the tube main body 33 and a large diameter portion 28b covering the circular cylinder portion 32.

A material of the waterproof cap 28 can be various materials having a stretching property, a waterproof property, an anti-corrosion property, and so forth. Such materials can be, for example, materials having various types of synthetic resin and synthetic rubber as a chief ingredient. Alternatively, in order to confer a heat insulating property, foam of the materials specified above may be used.

Instead of the waterproof cap or together with the waterproof cap, a waterproof tape may be used as a waterproof material. Besides the materials specified above, a material of the waterproof tape can be, for example, a heat-insulating, waterproof, and anti-corrosion tape formed of a combination of polyethylene foam having a stretching property and a heat insulating property and butyl rubber having a waterproof property, an anti-corrosion property, and an adherence property.

When the refrigerant pipe 1 is connected to the outdoor unit 17, the flare portion 34 of the flare tube 3 is allowed to abut on the inclined surface 36 of the joint main body 20 first. More specifically, the through-hole (refrigerant channel) 3a of the flare tube 3 and the through-hole 20a (refrigerant channel) of the joint main body 20 are brought into coincidence with each other. Subsequently, the flare unit 5 is threaded into the male screw portion 37 of the joint main body 20. Finally, the waterproof cap 28 into which is preliminarily inserted the flare tube 3 is capped on the circular cylinder portion 32 so as to bridge between the tube main body 33 of the flare tube 3 and the circular cylinder portion 32 of the flare nut 5.The refrigerant pipe 1 is thus connected to the outdoor unit 17 in a liquid-tight state and an air-tight state. The other end portion of the refrigerant pipe 1 and the both end portions of the refrigerant pipe 2 are of the same configuration as above and therefore connected in the same procedure as above.

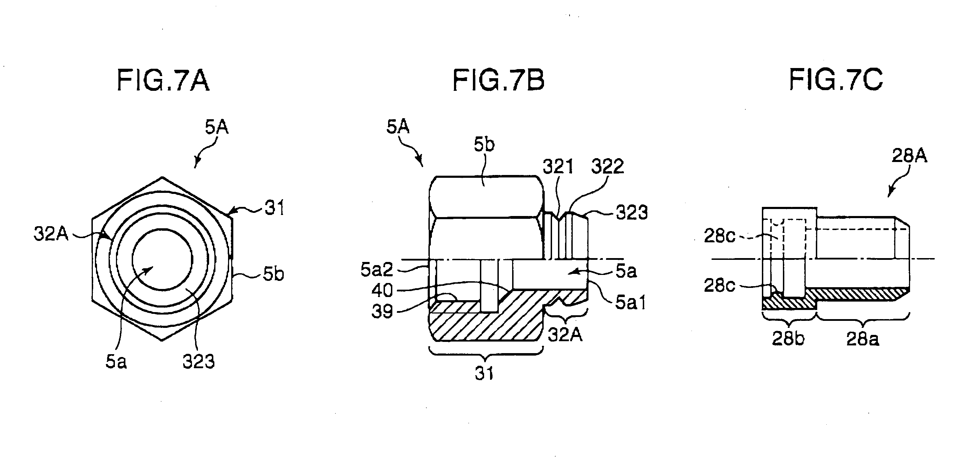

Another embodiment of the present invention will now be described with reference to Fig. 7A through Fig. 7C. In this embodiment, similar components are labeled with similar reference numerals with respect to the embodiment described above (Fig. 4, Fig. 6A and Fig. 6B ) , and a detailed description of such components is omitted herein.

As are shown in Fig. 7A and Fig. 7B, a flare nut 5A of this embodiment has a step on the outer surface of a circular cylinder portion 32A. This step is formed of one trough portion 321 and one crest portion 322 provided in an annular shape along the circumferential direction of the circular cylinder portion 32A. The circular cylinder portion 32A has an inclined surface (inclined portion) 323 having a major diameter that becomes smaller toward the one opening end 5al on the side of the one opening end 5al.

As is shown in Fig. 7C, a waterproof cap 28A is disposed so as to bridge between the tube main body 33 of the flare tube 3 (Fig. 3 ) and the circular cylinder 32A and is of a circular cylindrical shape covering at least a part of the outer surface of the tube main body 33 and at least a part of the outer surface of the circular cylinder portion 32A. The waterproof cap 28A is of a circular cylindrical shape formed of a small diameter portion 28a covering a part of the tube main body 33 and a large diameter portion 28b covering the circular cylinder portion 32A.

A protrusion portion 28c in an annular shape protruding inward in the radial direction of the large diameter portion 28b is provided on the inner surface of the large diameter portion 28b. The protrusion portion 28c is configured so as to fit in the trough portion 321 of the circular cylinder portion 32A when the waterproof cap 28A is attached to the flare nut 5A and the tube main body 33 of the flare tube 3. Owing to this configuration, displacement of the covering position of the waterproof cap 28A can be suppressed further. Moreover, because the protrusion portion 28c is of an annular shape, the effect of sealing a gap between the circular cylinder portion 32A and the waterproof cap 28A can be further enhanced.

Although the descriptions are omitted herein, the other configurations, functions and effects of this embodiment are the same as those of the embodiment described above (Fig. 4,

Fig. 6A, and Fig. 6B) . Also, the number of the steps provided to the circular cylinder portion 32 (32A) is not particularly limited. Hence, as are shown in Fig. 6A and Fig . 6B , a plurality of the trough portions 321 may be provided or, as are shown in Fig. 7A and Fig. 7B, one trough portion 321 may be provided.

The embodiments above can be summarized as follows.

(1) According to the embodiments described above, a flare nut is used to connect a flare tube having a tube main body of a circular cylindrical shape and a flare portion formed at an end portion of the tube main body to a joint main body of a tubular shape having a male screw portion on an outer surface in a state where respective through-holes communicate with each other. The flare nut has an insertion hole in which a part of the flare tube including the flare portion is disposed on a side of one opening end and a part of the joint main body including the male screw portion is disposed on a side of the other opening end. The flare nut includes a nut main body having a female screw portion adapted to be screwed onto the male screw portion and a pressing portion pressing the flare portion toward the joint main body on an inner surface of the insertion hole and an outer surface of a polygonal shape in cross section, and a circular cylinder portion provided so as to extend from the nut main body to the one opening end along the insertion hole in a circular cylindrical shape having a major diameter smaller than the nut main body and adapted to be covered with a waterproof material sealing a gap between the circular cylinder portion and the tube main body at the one opening end.

According to the embodiments above, the circular cylinder portion is provided so as to extend from the nut main body to the one opening end of the insertion hole along the insertion hole and the circular cylinder portion is of a circular cylindrical shape having the major diameter smaller than the nut main body. The circular cylinder portion is covered with the waterproof material sealing a gap between the circular cylinder portion and the tube main body at the one opening end of the insertion hole.

Normally, the nut main body of the flare nut has to be threaded into the joint main body and press the flare portion of the flare tube, so that the flare tube and the joint main body are fixed to each other. When the flare nut is threaded into the joint main body, the flare nut and the joint main body are secured to each other by fitting a tool on the outer surface of the nut main body. Accordingly, because the nut main body requires high rigidity, it is difficult to lessen the major diameter of the nut main body to be close to the major diameter of the tube main body of the flare tube. Moreover, because it is necessary to fit a tool on the outer surface at the time of threading, the outer surface of the nut main body has to have a polygonal shape in cross section. Assume that the conventional flare nut formed of the nut main body alone without the circular cylinder portion is covered with the waterproof material, the flare nut is covered with the waterproof material in such a manner that the waterproof material bridges between the tube main body of the flare tube of a circular cylindrical shape and the nut main body having the outer surface of a polygonal shape. In this case, because the outer surface of the nut main body is of a polygonal shape, a gap is readily generated between the nut main body and the waterproof material and between the nut main body and the tube main body. Moreover, as has been described above, because the nut main body itself requires high rigidity, a difference in major diameter from the tube main body of the flare tube becomes larger, which gives rise to a significant step between the tube main body and the nut main body. Consequently, a gap is more readily generated between the nut main body and both the tube main body and the waterproof material. In addition, with the conventional flare nut, there is a case where moisture is frozen in a gap between the tube main body and the flare nut while the device, such as an air conditioner and a freezer, is in operation and the durability of the flare nut is deteriorated by the expansion force.

By contrast, according to the embodiments described above, because the flare nut includes the circular cylinder portion provided so as to extend from the nut main body, it becomes possible to lessen the major diameter of the circular cylinder portion markedly to be smaller than the major diameter of the nut main body independently of the rigidity required to the nut main body. Moreover, the outer surface can be of a circular shape in cross section. In this manner, because a different in major diameter between the circular cylinder portion and the tube main body is small and both the circular cylinder portion and the tube main body are of a circular cylinder shape, a gap between the circular cylinder portion and both the tube main body and the waterproof material is not readily generated. Consequently, the waterproof property suppressing entrance of moisture from a space between the circular cylinder portion and the tube main body can be enhanced. Hence, not only does it become possible to enhance the anti-resistance property against bimetallic corrosion, but it also becomes possible to suppress durability deterioration of the flare nut caused by moisture freezing in a gap between the tube main body and the flare nut while the device is in operation.

Moreover, because a step between the circular cylinder portion and the tube main body can be made smaller by making the major diameter of the circular cylinder smaller than the nut main body, the waterproof material can be readily attached between the circular cylinder portion and the tube main body

Also, the circular cylinder portion provided so as to extend from the nut main body has a function of forcing the nut main body of the flare nut and the flare portion of the flare tube to oppose the joint main body correctly at the time of construction. Consequently, attachment accuracy of the refrigerant pipe set can be uniform at the time of construction. It thus becomes possible to forestall an erroneous attachment that causes an inconvenience, such as a gas leak.

Hence, according to the embodiments above, not only can a higher waterproof property than in a conventional case be obtained, but also the attachment accuracy at the time of construction can be uniform. The reliability can be therefore enhanced.

(2) It is preferable that the major diameter of the circular cylinder portion is as small as or smaller than a minor diameter of the female screw portion.

When configured in this manner, the major diameter of the circular cylinder portion is made as small as or smaller than the minor diameter of the female screw portion. As has been described, the major diameter of the circular cylinder portion is independent of the rigidity required to the nut main body by providing the circular cylinder portion so as to extend from the nut main body. It thus becomes possible to make the major diameter of the circular cylinder portion markedly to be as small as or smaller than the minor diameter of the female screw portion by making the circular cylinder portion thinner. Accordingly, because a difference in major diameter from the tube main body of the flare tube can be reduced further, the covering by the waterproof material becomes further easier while a gap between the tube main body and the waterproof material is not readily generated.

(3) It is preferable that the circular cylinder portion has an anti-slip step for the waterproof material on the outer surface.

When configured in this manner, because a step is provided on the outer surface of the circular cylinder portion, when the outer surface of the circular cylinder portion is covered with the waterproof material, the step plays a role of an anti-slip for the waterproof material. Accordingly, because displacement of the covering position of the waterproof material can be suppressed, the reliability in the waterproof property can be enhanced further.

(4) It is preferable that the circular cylinder portion has an inclined portion having a major diameter that becomes smaller toward the one opening end on the side of the one opening end.

When configured in this manner, because the circular cylinder portion has the inclined portion on the side of the one opening end, the circular cylinder portion can be covered with the waterproof material more readily. The workability when covering the circular cylinder portion with the waterproof material can be therefore enhanced further. Moreover, because the step between the outer surface of the tube main body of the flare tube and the outer surface of the circular cylinder portion can be made further smaller, the waterproof material readily fits smoothly from the tube main body to the circular cylinder portion. Consequently, because a gap between the waterproof material and the circular cylinder portion is not more readily generated, the reliability in the waterproof property can be enhanced further.

( 5 ) A refrigerant pipe set of this embodiment includes: a flare tube having a tube main body and a flare portion formed at an end portion of the tube main body and consisting primarily of one of a first metal and alloy thereof ; a joint main body of a tubular shape having an inclined surface on a tip end side to which the flare portion is opposed and a male screw portion on an outer surface; the flare nut having any one of the configurations described above and consisting primarily of one of a second metal and alloy thereof different from the first metal and used to connect the flare tube and the joint main body in a state where the respective through-holes communicate with each other_{:} and a waterproof material disposed so as to bridge between the tube main body and the circular cylinder portion in order to seal a gap between the circular cylinder portion and the tube main body at the one opening end and covering at least a part of the outer surface of the tube main body and at least a part of the outer surface of the circular cylinder portion.

When configured in this manner, the flare nut has any one of the configurations described above; moreover, the flare nut includes the waterproof material sealing a gap between the circular cylinder portion of the flare nut and the tube main body of the flare tube. The refrigerant pipe set therefore has an excellent reliability in the waterproof property between the circular cylinder portion and the tube main body. Consequently, even when the chief ingredient of the flare nut is metal or alloy different from that of the flare tube, it becomes possible to obtain a refrigerant pipe set excellent in the anti-corrosion property against the bimetallic corrosion. Moreover, because the structure is made simpler than the structure described in the reference above, the manufacturing steps can be simpler and the cost can be reduced when configured in this manner.

(6) It is preferable that the first metal is aluminum and the second metal is brass.

When configured in this manner, because the chief ingredient of the flare tube is aluminum or alloy thereof, the material costs can be reduced in comparison with the flare tube made of copper or alloy thereof as in a conventional manner or the flare tube formed by joining copper and aluminum or alloy thereof as described in the reference above. In addition, because the chief ingredient of the flare nut is brass or alloy thereof the flare nut has rigidity satisfying the required rigidity.

(7) It is preferable that the waterproof material is a waterproof cap of a circular cylindrical shape.

When configured in this manner, because the waterproof material is a waterproof cap preliminarily molded into a circular cylindrical shape, it becomes further easier to attach the waterproof material to the circular cylinder portion and the tube main body of a circular cylindrical shape.

( 8 ) It is preferable that the waterproof cap has a small diameter portion covering the outer surface of the tube main body and a large diameter portion covering the outer surface of the circular cylinder portion.

When configured in this manner, because the waterproof cap has the small diameter portion and the large diameter portion preliminarily molded so as to conform to the shapes of the tube main body and the circular cylinder portion, respectively, it becomes further easier to attach the waterproof material to the circular cylinder portion and the tube main body of a circular cylindrical shape.

(9) It is preferable that an anti-slip step for the waterproof cap is provided on the outer surface of the circular cylinder portion and a protrusion portion that fits in the step is provided on an inner surface of the large diameter portion of the waterproof cap.

When configured in this manner, because the protrusion portion that fits in the step is provided, displacement of the covering position of the waterproof cap can be suppressed further.

(10) An air conditioner according to the embodiments above includes: an outdoor unit, an indoor unit, and the refrigerant pipe set described above serving as a channel for circulating a refrigerant between the outdoor unit and the indoor unit.

It should be appreciated that the present invention is not limited to the embodiments described above and various modifications and improvements are possible without deviating from the scope of the invention. For example, the embodiments above described a case where a step formed of a trough portion and a crest portion provided in an annular shape along the circumferential direction of the circular cylinder portion is formed in the circular cylinder portion by way of example. However, the step may not be formed in the circular cylindrical portion or a step in a protruding shape or a step in a groove shape may be formed as well.

Also, the embodiments above described a case where the flare tube is made of aluminum alloy and the flare nut and the joint main body are made of brass by way of example. Regarding these members, however, other materials satisfying the required properties can be used for the respective members.

The embodiments above described a case where, as is shown in Fig. 2, there is a gap between the inclined surface of the circular cylinder portion and the inner surface of the waterproof cap by way of example . However, it may be configured in such a manner that there is substantially no gap between the inclined surface of the circular cylinder portion and the inner surface of the waterproof cap. Consequently, the reliability in the waterproof property can be enhanced further.

The embodiments above described an air conditioner by way of example. It should be appreciated, however, that the flare nut of the present invention and the refrigerant pipe set including the same are also applicable to the other devices, such as a freezer. A freezer in this case can use the refrigerant pipe set described in the embodiments above as a channel for circulating a refrigerant. The freezer includes an evaporator, a condenser, a compressor, and so forth, all of which are connected by the refrigerant pipe set.

## Claims

1. A flare nut used to connect a flare tube having a tube main body of a circular cylindrical shape and a flare portion formed at an end portion of the tube main body to a joint main body of a tubular shape having a male screw portion on an outer surface in a state where respective through-holes communicate with each other, including:
an insertion hole in which a part of the flare tube including the flare portion is disposed on a side of one opening end and a part of the joint main body including the male screw portion is disposed on a side of the other opening end;
a nut main body having a female screw portion adapted to be screwed onto the male screw portion and a pressing portion pressing the flare portion toward the joint main body on an inner surface of the insertion hole and an outer surface of a polygonal shape in cross section; and
a circular cylinder portion provided so as to extend from the nut main body to the one opening end along the insertion hole in a circular cylindrical shape having a major diameter smaller than the nut main body and adapted to be covered with a waterproof material sealing a gap between the circular cylinder portion and the tube main body at the one opening end.

2. The flare nut according to claim 1, wherein:
the major diameter of the circular cylinder portion is as small as or smaller than a minor diameter of the female screw portion.

3. The flare nut according to claim 1 or 2, wherein:
the circular cylinder portion has an anti-slip step for the waterproof material on the outer surface.

4. The flare nut according to any one of claims 1 through 3, wherein:
the circular cylinder portion has an inclined portion having a major diameter that becomes smaller toward the one opening end on the side of the one opening end.

5. A refrigerant pipe set, comprising:
a flare tube having a tube main body and a flare portion formed at an end portion of the tube main body and consisting primarily of one of a first metal and alloy thereof;
a joint main body of a tubular shape having an inclined surface on a tip end side to which the flare portion is opposed and a male screw portion on an outer surface;
the flare nut set forth in any one of claims 1 through 4 consisting primarily of one of a second metal and alloy thereof different from the first metal and used to connect the flare tube and the joint main body in a state where the respective through-holes communicate with each other; and
a waterproof material disposed so as to bridge between the tube main body and the circular cylinder portion in order to seal a gap between the circular cylinder portion and the tube main body at the one opening end and covering at least a part of the outer surface of the tube main body and at least a part of the outer surface of the circular cylinder portion.

6. The refrigerant pipe set according to claim 5, wherein:
the first metal is aluminum and the second metal is brass.

7. The refrigerant pipe set according to claim 5 or 6, wherein:
the waterproof material is a waterproof cap of a circular cylindrical shape.

8. The refrigerant pipe set according to claim 7, wherein:
the waterproof cap has a small diameter portion covering the outer surface of the tube main body and a large diameter portion covering the outer surface of the circular cylinder portion.

9. The refrigerant pipe set according to claim 8, wherein:
the circular cylinder portion has an anti-slip step for the waterproof cap provided on the outer surface thereof and the large diameter portion of the waterproof cap has a protrusion portion that fits in the anti-slip step provided on an inner surface thereof.

10. An air conditioner, comprising:
an outdoor unit;
an indoor unit; and
the refrigerant pipe set forth in any one of claims 5 through 9 serving as a channel for circulating a refrigerant between the outdoor unit and the indoor unit.

11. A freezer, comprising:
the refrigerant pipe set forth in any one of claims 5 through 9 serving as a channel for circulating a refrigerant .
